# NEUE EUROPÄISCHE PATENTSCHRIFT

(11) **EP 0 280 785 B2**
(45) Veröffentlichungstag und Bekanntmachung des Hinweises auf die Entscheidung über den Einspruch: **15.03.1995**
(45) Hinweis auf die Patenterteilung: 13.05.1992
(21) Anmeldenummer: 87119237.3
(22) Anmeldetag: 24.12.1987
(51) Int. Cl.: G01L 5/28

(54) **Bremsprüfstand für Kraftfahrzeuge, insbesondere Pkw, mit ABS-Bremsanlagen**
Test bench for motor vehicle brakes, in particular for passenger cars with an ABS device
Banc d'essai des freins de véhicules, en particulier d'automobiles à dispositif d'anti-blocage des freins

(30) Priorität: 06.02.1987 DE 3703573
(43) Veröffentlichungstag der Anmeldung: 07.09.1988
(73) Patentinhaber: Rheinisch-Westfälischer Technischer Überwachungs-Verein e.V., 45138 Essen (DE)
(72) Erfinder: Rothmann, Werner, Dipl.-Ing., D-4300 Essen 1 (DE)
(74) Vertreter: Honke, Manfred, Dr.-Ing.

(56) Entgegenhaltungen:
- AU-B- 453 957
- DE-A- 2 735 925
- DE-A- 3 040 254
- DE-C- 3 007 362
- DE-U- 8 615 913
- US-A- 3 952 589
- US-A- 3 962 914
- US-A- 3 977 243
- A.T.Z. AUTOMOBILTECHNISCHE ZEITSCHRIFT, Band 84, Nrs. 7,8, Juli/August 1982, Seiten 377-380, Schwäbisch Gmünd, DE; S. KURLBAUM: "Vier-Trommel-Fahrzeugprüfstand für Bremsen und Allgemeinuntersuchungen"
- Kraftfahrtechnisches Taschenbuch, Bosch (DE), 1987, Seiten 493 und 529

## Beschreibung

Die Erfindung betrifft einen Bremsprüfstand für Kraftfahrzeuge, insbes. Personenkraftwagen (Pkw), mit ABS-Bremsanlagen, mit Prüfrollensätzen für die Fahrzeug-Vorderräder und die Fahrzeug-Hinterräder, mit einer Vorrichtung zum Erfassen der Drehzahlen der Prüfrollen und mit einer Vorrichtung zum Vergleichen der Prüfrollendrehzahlen mit anderen Meßgrößen, wobei die Prüfrollensätze miteinander gekoppelt sind. - ABS meint bekanntlich Antiblockiersystem.

Um die Bremswirkung von Bremsanlagen bei Kraftfahrzeugen und insbes. Pkw zu ermitteln, sind stationäre Bremsprüfstände in Rollenbauweise bekannt. Derartige Bremsprüfstände weisen regelmäßig einen einzigen Prüfrollensatz auf, um die Vorderradachse und Hinterradachse einzeln zu prüfen. wobei die Prüfgeschwindigkeit bei 2 - 5 km/h liegt. Die Bremswirkung von Kraftfahrzeugen mit herkömmlichen Bremsanlagen wird als Bremskraft an den Fahrzeug-Rädern festgestellt, es wird also der Bremskraftverlauf beobachtet. - Derartige Bremsprüfstände sind jedoch für die Ermittlung der Bremswirkung von Kraftfahrzeugen mit ABS-Bremsanlagen ungeeignet. Denn einerseits ist die Prüfgeschwindigkeit so niedrig, daß ABS-Systeme nicht ansprechen, andererseits ist die Beobachtung von Bremskraftverläufen ungünstig, weil letztere aufgrund von Elastizitäten im Reifen und in der Radaufhängung verfälscht werden.

Das gilt auch für einen bekannten Bremsprüfstand mit Prüfrollensätzen für die Fahrzeug-Vorderräder und die Fahrzeug-Hinterräder, der außerdem mit Vorrichtungen zum Erfassen der Drehzahlen der Prüfrollen und zum Vergleichen der Prüfrollendrehzahlen mit anderen Meßgrößen eingerichtet ist. Bei diesem bekannten Bremsprüfstand arbeitet ein Antriebsmotor auf die Prüfrollensätze, und zwar unter Zwischenschaltung von Meßvorrichtungen für die Drehmomente. Außerdem sind den Prüfrollensätzen Vorrichtungen zur Ermittlung der Winkelgeschwindigkeit zugeordnet. Die für die Drehmomente und Winkelgeschwindigkeit erhaltenen Meßsignale werden einem elektronischen Rechner zugeführt, welcher die auf die Prüfrollen bzw. Prüfrollensätze ausgeübten Kräfte und ggf. Bremskraftverläufe ermittelt (vgl. US-A 39 52 589).

Außerdem kennt man Bremsprüfstände, bei denen zumindest ein Prüfrollensatz in Fahrzeuglängsrichtung verschiebbar gelagert und die jeweils hintere Prüfrolle der Prüfrollensätze überhöht angeordnet ist, um einerseits eine Anpassung an den jeweiligen Radstand zu erreichen, andererseits das Herausheben des zu prüfenden Kraftfahrzeuges aufgrund der auftretenden Bremskräfte zu vermeiden (vgl. AU-B-453 957). Bei diesem bekannten Bremsprüfstand sind die Stützrollen für die Fahrzeug-Hinterräder in Fahrzeuglängsrichtung verschiebbar, um eine Anpassung an unterschiedliche Radstände zu erreichen.

Weiter kennt man einen Prüfstand mit Prüfrollensätzen, deren Prüfrollen nicht angetrieben sind. In diesem Fall werden einerseits die Drehzahlen der Prüfrollen erfaßt, andererseits die auftretenden Bremskräfte und Drehmomente. Außerdem ist eine Schlupfanzeige für Kraftfahrzeuge mit ABS-Bremsanlagen vorgesehen. Allerdings soll die ABS-Bremsanlage dann funktionsgerecht arbeiten, wenn selbst bei plötzlicher und starker Bremsung bzw. Bremshebelbetätigung keine Schlupfanzeige erfolgt. Tatsächlich ist jedoch der Radschlupf für die Bewertung von ABS-Funktionen ein unerläßliches Kriterium. Aus diesem Grunde läßt sich mit diesem bekannten Prüfsrand die Bremswirkung von ABS-Bremsanlagen kaum in hinreichend exakter Weise erfassen (vgl. US-A 39 62 914).

Man kennt im übrigen einen Vier-Trommel-Fahrzeugprüfsrand für Bremsen - und Allgemeinuntersuchungen, bei dem jede Achse des Zwei-Achsenprüfstandes ein Gleichstromantrieb und ein Getriebe zugeordnet sind. Insoweit werden also angetriebene Prüfrollen verwirklicht (vgl. ATZ Band 84, (1982) 7/8).

Neuformulierter Beschreibungsteil zum Ersatz der erteilten Fassung der Beschreibung Spalte 2, Zeile 27 bis Spalte 3, Zeile 25.

Endlich ist eine Prüfeinrichtung für Kraftfahrzeuge mit lediglich einem Prüfrollensatz bekannt. Diese Prüfeinrichtung besitzt zwei in vorbestimmtem Abstand und parallel zueinander angeordnete Laufrollen, auf welche ein Rad eines zu prüfenden Kraftfahrzeuges aufsetzbar ist. Weiter ist eine Umfangsmeßeinrichtung zur Messung von Drehzanlen und Drehzahländerungen der Laufrollen und der Prüfrolle vorgesehen. Auf diese Weise kann der Schlupf eines zu prüfenden Kraftfahrzeugrades auf einer simulierten Straße gemessen werden. Insgesamt soll gleichzeitig und kontinuierlich eine Mehrzahl von Parametern in einem ausgedehnten Bereich von Fahrzeuggeschwindigkeiten bzw. Motordrehzahlen gemessen und aufgezeichnet werden (vergl. DE-A1-27 35 925).

Der Erfindung liegt die Aufgebe zugrunde, einen Bremsprüfstand der eingangs beschriebenen Art zu schaffen, welcher die Ermittlung der Bremswirkung von ABS-Bremsanlagen in einfacher, funktionsgerechter und exakter Weise ermöglicht.

Zur Lösung dieser Aufgabe ist der gattungsgemäße Bremsprüfstand dadurch gekennzeichnet, daß eine Vorrichtung zum Erfassen der Drehzahlen der einzelnen Fahrzeugräder vorgesehen ist und die andere Vorrichtung zum Vergleichen der Prüfrollendrehzahlen mit den Raddrehzahlen eingerichtet ist, daß der Prüfrollensatz für die Fahrzeug-Hinterräder als Rollenband ausgebildet ist, und daß dem Rollenband in Fahrzeuglängsrichtung verschiebbare Stützrollen für die Fahrzeug-Hinterräder zugeordnet sind. - Nach Lehre der Erfindung werden für die Überprüfung von ABS-Bremsanlagen die Radgeschwindigkeitsverläufe und nicht länger die Bremskraftverläufe herangezogen. Tatsächlich erfolgt die Bewertung der ABS-Funktion über den Radschlupf. Dazu werden die Drehzahlen der Prüfrollen, welche der Fahrgeschwindigkeit entsprechen, mit den Raddrehzahlen verglichen. Für die Funktionsprüfung der ABS-Bremsanlagen müssen die praktischen Straßenverhältnisse möglichst exakt nachgebildet werden, weil nicht jedes Fahrzeug-Rad individuell für sich geregelt wird. Vielmehr werden Verknüpfungen der Radgeschwindigkeit für die Regelung benutzt (z.B. Referenzgeschwindigkeit). Jedenfalls erfolgt die Nachbildung der Straßenverhältnisse durch die Kopplung der Prüfrollensätze miteinander, und zwar müssen die Rollensätze links/rechts oder durchgehende Prüfrollen ebenso wie die Rollensätze für die Vorder- und Hinterachse gekoppelt sein. Vorzugsweise ist die Schwungmasse der Prüfrollensätze bzw. Prüfrollen so groß, daß die Bremsdauer mindestens 2 Sek. bis 5 Sek. beträgt. Durch die Ausbildung des Prüfrollensatzes für die Fahrzeug-Hinterräder als Rollenband wird eine Anpassung an den jeweiligen Radstand erreicht und gleichsam eine Prüfrolle mit unendlichem Durchmesser bzw. ein Förderbandprinzip verwirklicht, welches eine Verstellung eines der beiden Prüfrollensätze überflüssig macht. Durch die in Fahrzeuglängsrichtung verschiebbaren, den Fahrzeug-Hinterrädern zugeordneten Stützrollen wird ein Herausheben des zu prüfenden Kraftfahrzeuges aufgrund der auftretenden Bremskräfte vermieden. In diesem Zusammenhang schlägt die Erfindung weiter vor, daß in Fahrzeugfahrrichtung die jeweils hintere Prüfrolle der Prüfrollensatze vorzugsweise überhöht angeordnet ist. Alternativ ist auch eine Fesselung des betreffenden Kraftfahrzeuges mit am Boden verankerten Gurten unter Verwendung der an Kraftfahrzeugen vornandenen Abschleppösen möglich.

Weitere vorteilhafte Ausgestaltungen der Erfindung sind im folgenden aufgeführt. Zur Vermeldung von Stabilitätsproblemen bei höheren Prüfgeschwindigkeiten können die Prüfrollen links/rechts der Prüfrollensätze mit Schrägstellung zueinander geneigt sein. Diese Schrägstellung ist nur bei der gelenkten Radachse erforderlich, damit eine Selbststabilisierung des Kraftfahrzeuges erreicht wird. - Weiter lehrt die Erfindung, daß die Einrichtung zum Erfassen der Drehzahlen der Fahrzeug-Räder Drehzahlsensoren oder Tastrollen aufweist. Bei der Ausführungsform mit dem Rollenband sind die Stützrollen als Tastrollen ausgebildet. Die Tastrollen sind für alle vier Fahrzeugräder mit hochlauflösender Drehzahlabtastung vorgesehen. - Die Schwungmasse der Prüfrollen bzw. plus der mechanisch gekoppelten Zusatz-Schwungmasse, die vorzugsweise mit größerer Drehzahl rotiert, muß so groß sein, daß bei einer Vollbremsung der Bremsvorgang mehrere Sekunden dauert. Gegebenenfalls kann eine Leistungsbremse zur Simulation und/oder zur Einstellung der Schwungmasse herangezogen werden. - Die Prüfrollen weisen zweckmäßigerweise eine glatte Oberfläche auf, damit Reifenbeschädigungen vermieden werden, wenn ein Fahrzeug-Rad blockiert.

Im folgenden wird die Erfindung anhand einer lediglich ein Ausführungsbeispiel darstellenden Zeichnung näher erläutert; es zeigen:
- Fig. 1: einen Bremsprüfstand in schematischer Seitenansicht,
- Fig. 2: einen erfindungsgemäßen Bremsprüfstand mit einem Rollenband für die Hinterachse,
- Fig. 3: eine Aufsicht auf den Gegenstand nach Fig. 2 ohne Fahrzeug,
- Fig. 4: eine Frontansicht auf den Gegenstand nach Fig. 2 und
- Fig. 5: schematisch ein Auswertungsdiagramm.

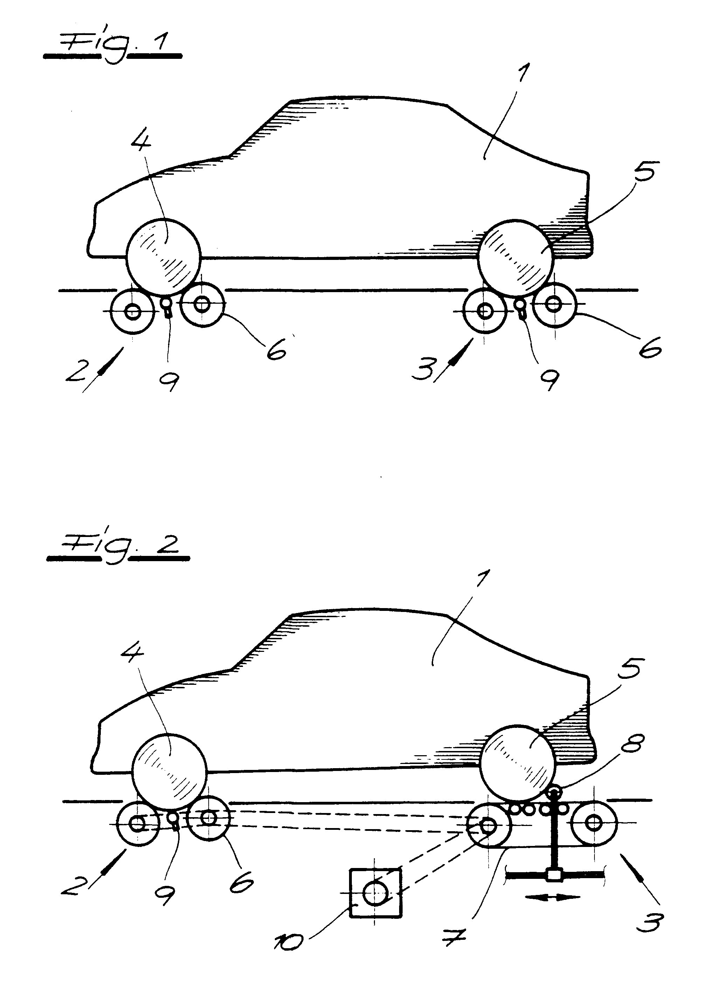

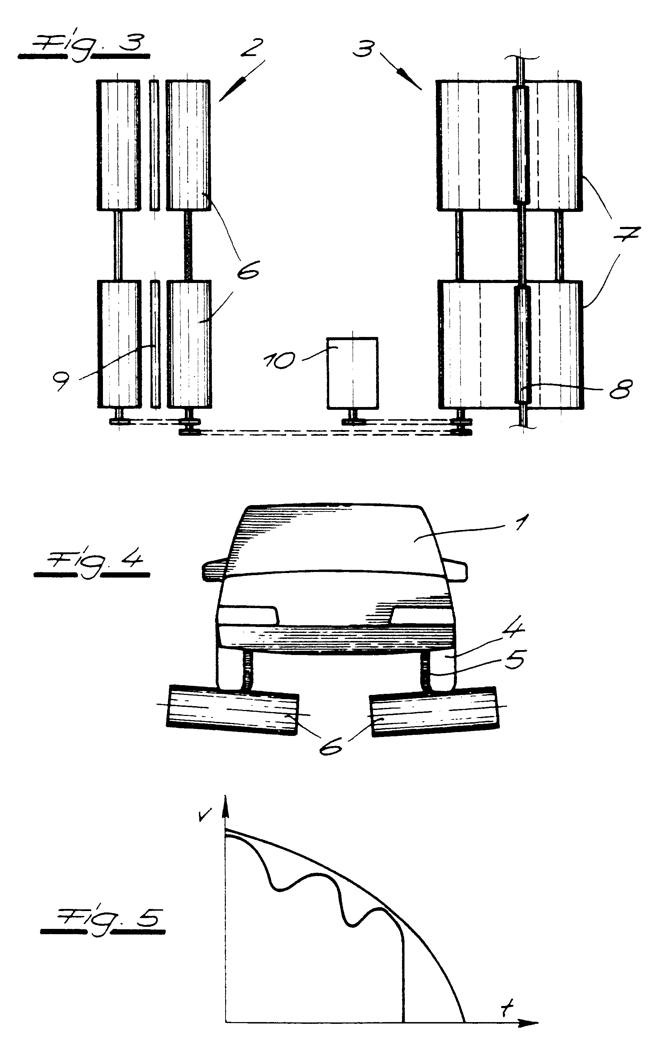

In den Figuren ist ein Bremsprüfstand für Kraftfahrzeuge 1, insbes. Pkw. mit ABS-Bremsanlagen dargestellt. Dieser Bremsprüfstand ist als Allrad-Prüfstand bzw. Zweiachs-Prüfstand mit Prüfrollensätzen 2, 3 für die Fahrzeug-Vorderräder 4 und die Fahrzeug-Hinterräder 5 ausgebildet. Ferner sind Vorrichtungen zum Erfassen der Drehzahlen der einzelnen Fahrzeug-Räder 4, 5 und der Prüfrollen 6 ebenso wie eine Vorrichtung zum Vergleichen der Prüfrollendrehzahlen mit den Raddrehzahlen vorgesehen, was im einzelnen nicht gezeigt ist. Die Prüfrollensätze 2, 3 sind miteinander gekoppelt. Sie sind antriebsfrei, benötigen also keinen eigenen Antriebsmotor. Bei der Ausführungsform nach Fig. 2 ist der Prüfrollensatz für die Fahrzeug-Hinterräder 5 als Rollenband 7 und folglich Endlosrolle ausgebildet. Im ersteren Fall ist in Fahrzeugfahrrichtung die jeweils hintere Prüfrolle 6 der Prüfrollensätze 2, 3 überhöht angeordnet, während im letzteren Fall dem Rollenband 7 in Fahrzeuglängsrichtung verschiebbare Stützrollen 8 für die Fahrzeug-Hinterräder 5 zugeordnet sind. Außerdem können die prüfrollen 6 links/rechts der Prüfrollensätze mit Schrägstellung zueinander geneigt sein.

Die Einrichtung zum Erfassen der Drehzahlen der Fahrzeug-Räder 4, 5 weist Drehzahlsensoren 9 oder Tastrollen auf. Bei der Ausführungsform mit dem Rollenband 7 sind aie Stützrollen 8 als Tastrollen ausgebildet. - Die Prüfrollensätze 2, 3 bzw. ihre Prüfrollen 6 können von einer Leistungsbremse 10 beaufschlagt sein. Die Prüfrollen 6 selbst weisen eine glatte Oberfläche auf.

Die Bewertung des bei Überprüfung der Bremswirkung auftretenden Schlupfes ist in einem Diagramm angedeutet.

## Patentansprüche

1. Bremsprüfstand für Kraftfahrzeuge, insbesondere Personenkraftwagen (Pkw), mit ABS-Bremsanlagen, mit Prüfrollensätzen (2, 3) für die Fahrzeug-Vorderräder (4) und die Fahrzeug-Hinterräder (5), mit einer Vorrichtung zum Erfassen der Drehzanlen der Prüfrollen (6) und mit einer Vorrichtung zum Vergleichen der Prüfrollendrehzahlen mit anderen Meßgrößen, wobei die Prüfrollensätze (2, 3) miteinander gekoppelt sind, **dadurch gekennzeichnet,** daß eine Vorrichtung zum Erfassen der Drehzahlen der einzelnen Fahrzeugräder (4, 5) vorgesehen ist und die andere Vorrichtung zum Vergleichen der Prüfrollendrehzahlen mit den Raddrehzahlen eingerichtet ist, daß der Prüfrollensatz für die Fahrzeug-Hinterräder (5) als Rollenband (7) ausgebildet ist, und daß dem Rollenband (7) in Fahrzeuglängsrichtung verschiebbare Stützrollen (8) für die Fahrzeug-Hinterräder (5) zugeordnet sind.

2. Bremsprüfstand nach Anspruch 1, dadurch gekennzeichnet, daß in Fahrzeugfahrrichtung die jeweils hintere Prüfrolle (6) der Prüfrollensätze (2, 3) überhöht angeordnet ist.

3. Bremsprüfstand nach Anspruch 1 oder 2, dadurch gekennzeichnet, daß die Prüfrollen (6) links/rechts der Prüfrollensätze (2, 3) mit Schrägstellung zueinander geneigt sind.

4. Bremsprüfstand nach einem der Ansprüche 1 bis 3, dadurch gekennzeichnet, daß die Einrichtung zum Erfassen der Drehzahlen der Fahrzeug-Räder (4, 5) Drehzahlsensoren (9) oder Tastrollen aufweisen.

5. Bremsprüfstand nach einem der Ansprüche 1 bis 4, dadurch gekennzeichnet, daß bei dem Rollenband (7) die Stützrollen (8) als Tastrollen ausgebildet sind.

6. Bremsprüfstand nach einem der Ansprüche 1 bis 5, dadurch gekennzeichnet, daß die Prüfrollensätze (2, 3) bzw. ihre Prüfrollen (6) von einer Leistungsbremse (10) beaufschlagbar sind.

## Claims

1. A brake test bed for motor vehicles, particularly private cars, with ABS braking equipment, with sets of test rollers (2, 3) for the front wheels (4) of the vehicle and for the rear wheels (5) of the vehicle, with a device for recording the rotational speeds of the test rollers (6) and with a device for comparing the rotational speeds of the test rollers with other measured variables, wherein the sets of test rollers (2, 3) are coupled to each other, characterised in that one device is provided for recording the rotational speeds of the individual wheels (4, 5) of the vehicle and the other device is arranged for comparing the rotational speeds of the test rollers with the rotational speeds of the wheels, that the set of test rollers for the rear wheels (5) of the vehicle is constructed as a rolling belt (7), and that support rollers (8) for the rear wheels (5) of the vehicle, which support rollers are displaceable in the longitudinal direction of the vehicle, are associated with the rolling belt (7).

2. A brake test bed according to claim 1, characterised in that, in the direction of travel of the vehicle the rear test roller (6) of each set of test rollers (2, 3) is disposed raised.

3. A brake test bed according to claim 1 or 2, characterised in that the test rollers (6) on the left/right of the sets of test rollers (2, 3) are tilted towards each other with an inclined setting.

4. A brake test bed according to any one of claims 1 to 3, characterised in that the device for recording the rotational speeds of the wheels (4, 5) of the vehicle has rotational speed sensors (9) or sensing rollers.

5. A brake test bed according to any one of claims 1 to 4, characterised in that the support rollers (8) for the rolling belt (7) are constructed as sensing rollers.

6. A brake test bed according to any one of claims 1 to 5, characterised in that the sets of test rollers (2, 3) or their test rollers (6) can be acted upon by a dynamometric brake (10).

## Revendications

1. Banc d'essai de freinage pour véhicules automobiles, notamment pour voitures de tourisme (Pkw) comportant des installations de freinage ABS, équipé d'ensembles (2,3) de rouleaux de contrôle pour les roues avant (4) et pour les roues arrière (5) du vélicule, comportant un dispositif pour détecter les vitesses de rotation des rouleaux de contrôle (6) et un dispositif pour comparer les vitesses de rotation des rouleaux de contrôle à d'autres grandeurs de mesure, les ensembles (2,3) de rouleaux de contrôle étant accouplés entre eux, caractérisé en ce qu'il est prévu un dispositif pour détecter les vitesses de rotation des différentes roues (4,5) du véhicule et que l'autre dispositif est agencé de manière à comparer les vitesses de rotation des rouleaux de contrôle aux vitesses de rotation des roues, que l'ensemble de rouleaux de contrôle pour les roues arrière (5) du véhicule est agencé sous la forme d'une table à rouleaux (7) et qu'à la table à rouleaux (7) sont associés des rouleaux de support (8) déplaçables dans la direction longitudinale du véhicule et prévus pour les roues arrière (5) du véhicule.

2. Banc d'essai de freinage selon la revendication 1, caractérisé en ce que dans la direction de déplacement du véhicule, chaque rouleau de contrôle arrière (6) des ensembles (2,3) des rouleaux de contrôle est disposé en étant surélevé.

3. Banc d'essai de freinage selon la revendication 1 ou 2, caractérisé en ce que les rouleaux de contrôle (6) à gauche/à droite des ensembles (2,3) des rouleaux de contrôle sont obliques en étant inclinés l'un vers l'autre.

4. Banc d'essai de freinage selon l'une des revendications 1 à 3, caractérisé en ce que les dispositifs servant à détecter les vitesses de rotation des roues (4,5) du véhicule possèdent des capteurs (9) de la vitesse de rotation ou des rouleaux danseurs.

5. Banc d'essai de freinage selon l'une des revendications 1 à 4, caractérisé en ce que dans le cas de la table à rouleaux (7), les rouleaux de support (8) sont réalisés sous la forme de rouleaux danseurs.

6. Banc d'essai de freinage selon l'une des revendications 1 à 5, caractérisé en ce que les ensembles (2,3) des rouleaux de contrôle ou leurs rouleaux de contrôle (6) peuvent être chargés par un frein dynamométrique (10).
